# EUROPEAN PATENT APPLICATION

(11) **EP 4 485 309 A1**
(43) Date of publication of application: **01.01.2025**
(21) Application number: 24185751.5
(22) Date of filing: 01.07.2024
(51) Int. Cl.: G06Q 10/087

(54) **DISPOSING RFID TAGS IN CONCRETE SURFACE**

(30) Priority: 30.06.2023 US 202318217104
(71) Applicant: A-1 Packaging Solutions, Inc., St. Charles, IL 60175 (US)
(72) Inventor: SCHOENING, Kenneth, St Charles (US)
(74) Representative: Forresters IP LLP

(57) **Abstract**

An inventory tracking and management system uses location designation RFID tags placed in recesses formed in the floor of an inventory storage and shipping environment. Each RFID tag includes an inlay that includes an antenna, an integrated circuit, and a substrate, with the antenna and the integrated circuit being disposed on the substrate location designation RFID tag. Each RFID tag can further include first and second layers on opposing sides of the inlay, and a printing layer that assists in identifying the placed RFID tag. An overall thickness of the RFID tag is such that the recess in the floor can be formed, for example, at a depth of no greater than 0.125 inches (3.175 mm, or even shallower), to enable an RFID reader to read the recessed RFID tags and reduce disturbance to the floor, while keeping the placed RFID tag level with other portions of the floor.

## Description

### FIELD OF DISCLOSURE

The present disclosure relates to inventory tracking and management systems and, more particularly, to methods and systems involving location designation radio frequency identification ("RFID") tags embedded in a floor surface of an environment in which the inventory tracking and management system is implemented.

### BACKGROUND

Radio frequency identification ("RFID") based inventory tracking and management systems may help facilitate efficient location, identification, and delivery of target products to a target destination within a storage and shipping environment, such as a warehouse. In one example, an inventory tracking and managing system includes a forklift (or other product transportation vehicle) installed with an RFID reader, antennas, user interface, and sensor to wirelessly identify a product on or near the forklift, confirm the correct product is picked up by the forklift via a centralized computer system, and communicate with the operator of the forklift (via the user interface) to deliver the target product to a target destination. As the operator drives the forklift within the environment, the RFID-based inventory tracking and management system (also referred herein as the "RFID-based system") continuously reads location designation RFID tags associated with the surrounding environment and communicates with a centralized computer to alert the operator (via the user interface) that the operator is on the correct track or path in real-time. Generally speaking, the RFID-based tracking system equips a forklift with the tools to read product and location designation RFID tags disposed on products and throughout the warehouse to fill orders accurately.

An example inventory tracking and management system includes an RFID reader and antennas disposed on a forklift, wireless communication devices and nodes disposed on the forklift and throughout the environment to facilitate data collection, storage and processing, a user interface device and detection system disposed on the forklift, and a centralized asset tracking and management device having a product and order database and a tracking and communication application. The user interface device carried by the forklift includes a remote tracking and communication application in communication with the centralized asset tracking and management device and the RFID reader to perform various tasks. The user interface device may include a display or interface screen to visually present information to the forklift operator or other user. The operation of the RFID-based inventory tracking and management system is described, for example, in U.S. Patent No. 11,358,067 filed May 22, 2020, and U.S. Patent No. 11,023,851, filed March 29, 2019.

The inventory tracking and management system includes various location and product designation RFID tags disposed around the environment and on products in the warehouse. For example, location designation RFID tags are disposed on the floor at various entrances, shipping docks, loading bays, and/or support structures throughout the environment; and product designation RFID tags are located on outer surfaces of containers or packaging of products stored in the warehouse environment. Each of the location designation RFID tags and the product designation RFID tags has a unique ID stored in the centralized asset tracking and management device to associate each location designation RFID tag with a particular landmark, and to associate each product designation RFID tag with a particular product of the warehouse inventory. The centralized tracking and communication application communicates with the user interface devices and the RFID tag readers to track and manage the movement of products between the bays, shelves and racks, and the shipping docks or loading bays of the environment.

Each forklift (or other product transportation vehicle) in the environment is integrated into the RFID-based system by installing a number of electronic components onto the forklift, connecting the forklift battery to the components, and connecting the components to each other. The components on the forklift may be electrically connected to each other in various arrangements. For example, in one aspect, the RFID reader, antennas, sensor, controller/transmitter, and user interface are all installed onto the forklift and draw power from the forklift battery. The RFID reader may be electrically wired to multiple antennas, user interface, a power source, and/or a transmitter/controller; the transmitter/controller may be electrically wired to the sensor or detection device disposed on the forklift (for example, the tongs of the forklift), the power source, and/or the RFID reader, and may be in communication with the user interface; and the sensor may be electrically wired to the power source and the transmitter/controller.

As described above, location designation RFID tags are disposed on the floor at various entrances, shipping docks, loading bays, and/or support structures throughout the environment. Generally, disposing the location designation RFID tags on the floor involves some means of securing the RFID tags to the floor, to avoid the RFID tags being disturbed by equipment, personnel, etc. moving about the environment. Traditionally, means considered for securing location designation RFID tags to a floor have involved drilling into the floor, or otherwise defacing the floor, so that the RFID tag(s) may be placed in the recess drilled into the floor and covered with a bonding agent (e.g., an epoxy, which may fill any remainder of the recess not filled by the RFID tag itself). However, it has been understood that such means of securing location designation RFID tags are associated with a number of drawbacks. For one, the heavy construction traditionally required to drill the floor (e.g., to a required depth of 0.25 inches or more) and place an RFID tag disadvantageously requires considerable work to add, move, and/or replace the RFID tag around the environment, and may permanently deface the floor of the facility when the floor must be drilled at least as deep as a thickness of the RFID tag. Moreover, even when a location designation RFID tag is placed in a recess of the floor, the floor of the environment surrounding the placed RFID tag may prevent or otherwise inhibit the RFID tag from receiving an interrogation signal from and/or transmitting an interrogation signal to an interrogator (e.g., an RFID reader). This phenomenon may be intensified when one or more buffer layers are attached to one or both sides of an inlay of the RFID tag, as is common for example to prevent damage to the inlay of the RFID tag containing the antenna when personnel, equipment, etc. pass over the RFID tag. That is, the placement of the buffer(s) over the RFID inlay may effectively place the inlay deeper within the recess in the floor, potentially further inhibiting the RFID tag from receiving the interrogation signal from and/or transmitting the interrogation signal to the interrogator.

Although a location designation RFID tag can alternatively be attached to the floor of the environment without creating a recess in the floor (*e*.*g*., using a mechanical fastener, or an adhesive), such that the location designation RFID tag is effectively raised from the surface of the floor. These alternative practices, however, present their own potential disadvantages. Particularly, depending on the thickness of the RFID tag, the RFID tag may pose an obstacle to personnel and/or equipment moving about the environment. Additionally, personnel and/or equipment (*e*.*g*., vehicles) moving over the RFID tag can unintentionally damage, remove, loosen, or detune the RFID tag.

### SUMMARY

Aspects of the invention are set out in the appended claims.

The present disclosure describes a location designation RFID tag that may be used in an inventory tracking and management system, as well as methods for placing and using the location designation RFID tag in a floor of an inventory storage and shipping environment such as a warehouse, storage facility, etc. Generally speaking, the present disclosure identifies that, for a disclosed location designation RFID tag having a substantially lesser thickness compared to RFID tags traditionally used in the field, the disclosed RFID tag can be placed into a recess formed into the floor of in the inventory storage/shipping environment. In view of the substantially lesser thickness of the disclosed RFID tag, the disclosed RFID tag may be placed in a recess formed in the floor of the environment, with the recess in the floor being substantially shallower than what has traditionally been understood in the field to be necessary to place a location designation RFID tag. For example, the recess at the floor may be formed at a depth at as little as 0.04 inches below the plane of the floor surrounding the recess (or a greater depth, in some implementations).

More particularly, in some aspects of the present disclosure, a location designation RFID tag (or each of many location designation RFID tags) includes an inlay having a long, thin antenna that reduces an overall thickness of the RFID tags compared to RFID tags traditionally used in the field. The inlay includes an antenna, an integrated circuit, and a substrate, with the antenna and the integrated circuit being disposed on the substrate. The location designation RFID tag can further include a first layer on a first side of the inlay, and a second layer disposed on a second side of the inlay, opposite to the first side of the inlay. An easily visible designation may be disposed (*e*.*g*., printed) on the surface and encoded on the inlay to assist with identifying where the location designation RFID belongs in the environment and with identifying where an individual or item is located within the storage facility. In some aspects, an adhesive (*e*.*g*., adhesive layer) is applied to the first and/or second layers to allow the location designation RFID tag to be variously applied to surfaces in the environment. In any case, the overall thickness of the location designation RFID tag (*i*.*e*., inclusive of any and all of the elements described above, when present) is substantially less than that of location designation RFID tags traditionally used in the field. Particularly, the overall thickness of the location designation RFID tag can be between 0.02 and 0.50 inches (0.508 and 12.7 mm), or more specifically, approximately 0.02 inches (0.508 mm), 0.03 inches (0.762 mm), or 0.04 inches (1.016 mm).

In view of the considerably lesser thickness of the disclosed location designation RFID tag, the disclosed location designation RFID tag may be placed in a recess in the floor of the inventory storage and shipping environment, without encountering many of the drawbacks traditionally understood to be associated with modifying a floor to accommodate location designation RFID tags. That is, the recess in the floor may be substantially shallower than traditionally understood to be necessary, while still accommodating the entire location designation RFID tag. For example, the recess may be formed at a depth identical to the overall thickness of the RFID tag, or not much more than the overall thickness of the RFID tag, such that the top of the placed location designation RFID tag is substantially level with the floor or the environment when the RFID tag is placed in the recess. In one example, for a location designation RFID tag having an overall thickness of 0.02 inches, the recess may be formed at a depth of 0.02 inches (0.508 mm), 0.03 inches (0.762 mm), 0.04 inches (1.016 mm), 0.10 inches (2.54 mm), 0.125 inches (3.175 mm), etc. As a result, to the extent that the floor of the environment is modified to accommodate the location designation RFID tag, the modification to the floor and placement/replacement of the RFID tag may require less work, less intensive physical equipment, and less defacement to the floor. Further, the placement of location designation RFID tags according to these techniques accounts for floor surfaces that may decay or otherwise not accept attempts to adhere a location designation RFID tag to the unmodified floor. Moreover, the shallower recess in the floor enables the placed RFID tag to more reliably receive an interrogation signal and/or transmit an interrogation signal to an interrogator (*e*.*g*., RFID reader), as compared to an RFID tag placed in a deeper recess in the floor according to traditional practices in the field.

In one aspect, an asset management and tracking system is provided for use in a facility. The asset management and tracking system includes one or more location designation radio frequency identification (RFID) tags disposed within a recess formed in a surface of a floor of the facility, each of the one or more location designation RFID tags indicating respective location information and being readable by an RFID reader to receive the location information. A depth of the recess with respect to the surface of the floor surrounding the recess is no greater than 0.125 inches (3.175 mm). Each of the one or more location designation RFID tags is entirely contained within the recess such that a top of each of the one or more location designation RFID tags is no higher than the surface of the floor surrounding the recess. In various aspects, the asset management and tracking system includes additional elements and/or characteristics discussed in the present disclosure.

In another aspect, a method associated with an asset management and tracking system in a facility is provided. The method includes forming a recess in a surface of a floor of the facility. Specifically, a depth of the recess with respect to the surface of the floor surrounding the recess is no greater than 0.125 inches (3.175 mm). The method further includes disposing one or more location designation radio frequency identification (RFID) tags entirely within the recess such that a top of each of the one or more location designation RFID tags is no higher than the surface of the floor surrounding the recess. Each of the one or more location designation RFID tags indicates respective location information and is readable by an RFID reader to receive the location information.

### BRIEF DESCRIPTION OF THE DRAWINGS

Fig. 1 is a top view of an example storage and shipping environment in which an RFID-based inventory tracking system is located;
Fig. 2A is a diagram of a first aspect of a movable device carrying various RFID tracking system components, in accordance with teachings of the present disclosure;
FIG. 2B is a diagram of a second aspect of a movable device carrying various RFID tracking system components, in accordance with teachings of the present disclosure;
FIG. 3 is a perspective view of an example location designation RFID tag disposed in the storage and shipping environment of FIG 1.
FIG. 4 is a cross-sectional view of the location designation RFID tag of FIG. 3;
FIG. 5 is an exploded side view of the location designation RFID tag of FIG. 3; and
FIG. 6 is a top view of the location designation RFID tag of FIG. 3.

### DETAILED DESCRIPTION

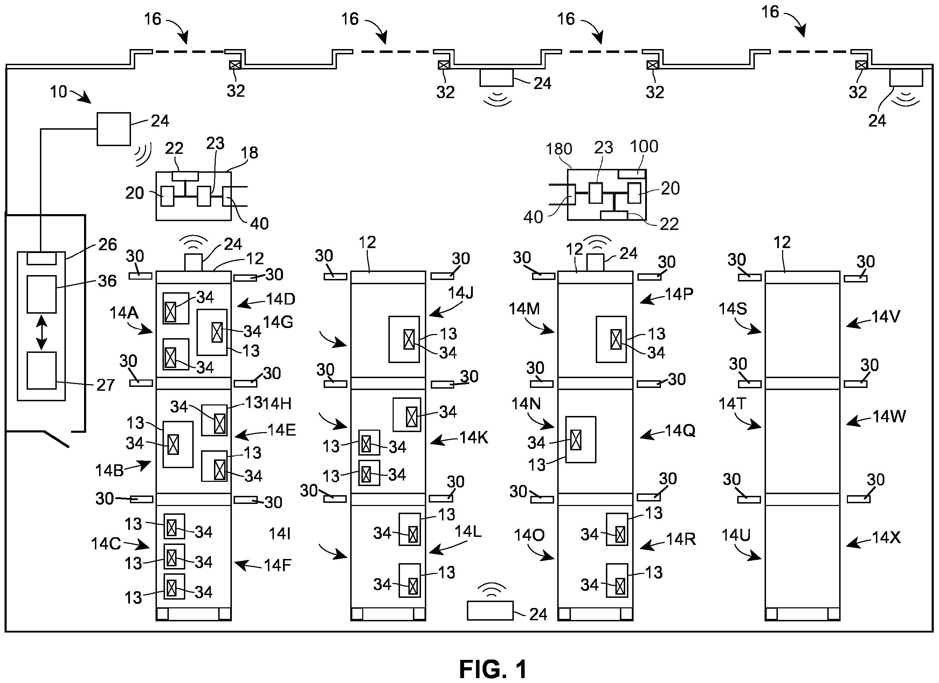

FIG. 1 depicts a top view of an example storage and shipping environment 10 (e.g., a warehouse, storage facility) in which an RFID-based inventory tracking system is disposed. The RFID-based inventory tracking system may be used to track the location of various different products, such as pallets of material, raw materials, rolls of material, etc., as these products are introduced into, stored in, produced in, and moved around within the environment 10, and as these products are taken from the storage and shipping environment 10 and placed onto one or more trucks or other delivery vehicles for delivery to a customer, for example. Although a storage and shipping environment 10 (such as a warehouse) is described, it should be appreciated that the storage and shipping environment 10 may include any of various environments in which an RFID-based tracking system tracks products and the locations thereof.

As illustrated in FIG. 1, the storage and shipping environment 10 includes a series of storage shelves 12, upon which various different products 13 may be stored for a period of time before being used in a manufacturing process or being shipped to a customer. Each of the shelves 12 includes various bays 14 therein, which indicate portions of the shelves 12. As is typical in a warehouse environment, each bay 14 (labeled as bays 14A-14X in FIG. 1) may be labeled with or designated with a unique identifier number within the context of the storage environment 10. Each shelf 12 may be double-sided, for example, so that there is a bay 14 on either side of each shelf 12. Likewise, the storage and shipping environment 10 includes a series of shipping docks or loading bays 16 that may be, for example, associated with loading bays at which trucks park to drop off or accept delivery of the products 13 within the environment 10. Still further, the storage and shipping environment 10 includes various movable devices (e.g., forklifts 18, 180, and/or other delivery vehicles) which are used to place various ones of the products 13 on the shelves 12 in various ones of the bays 14 for storage; to move products 13 around within the shelves 12 if desired; to take products off the shelves 12 and deliver those products to one of the loading bays 16 to be placed on a truck or other delivery vehicle, etc. Likewise, the forklifts 18, 180 may pick up new products or materials from the loading bays 16 (or from trucks at the loading bays 16) and place the new products or materials at any of the various bays 14 of the shelves 12 for storage and later use. Although forklifts 18, 180 are described herein, it should be appreciated that the forklifts 18, 180 may be replaced with other movable devices capable of moving/detecting products and having components described herein installed thereupon (*e*.*g*., reach lifts, pallet jacks, etc.).

In the storage and shipping environment 10 of FIG.1, an RFID-based tracking system is used to enable automatic recognition and tracking of the various products 13 as they are placed in various bays 14A-14X of the shelves 12, as these products 13 are moved between different bays 14A-14X of the shelves 12, and as these products 13 are loaded onto delivery trucks at the loading bays 16. Various RFID tags, including location designation RFID tags 30, 32 and product designation RFID tags 34, are placed in particular locations throughout the storage and shipping environment 10, for example to designate various locations where products may be placed for storage, shipment to a customer or another warehouse, or temporary storage used prior to a manufacturing process. Each of the RFID tags 30, 32, and 34 has a different and unique ID associated therewith and these IDs are known by an asset tracking and management device 26 or centralized computer, so that the asset tracking and management device 26 can associate each location designation RFID tag 30, 32 with a particular bay 14 or a loading bay 16 or another position within the storage facility, and each product designation RFID tag 34 with a particular product 13. The centralized computer 26 includes a product and order database 27 and a centralized asset tracking and management application 36 to track and store data related to the products and movement of the forklift 18, 180. Further information regarding the operation of the centralized computer 26, product and order database 37, and centralized asset tracking and management application 36 is found in subsequent portions of this disclosure, and in each of U.S. Patent No. 11,358,067 filed May 22, 2020, U.S. Patent No. 11,023,851, filed March 29, 2019, U.S. Patent Application No. 18/093,711, and U.S. Patent No. 11,443,158, filed April 22, 2020, the entire contents of each of which are incorporated herein by reference.

As discussed above, the location designation RFID tags 30, 32 are distributed throughout the environment 10, particularly in or near locations relevant to the movement of personnel and/or product(s) 13, for example at the shelves 12, the various bays 14A-14X, and the loading bays 16. More particularly, according to techniques of the present disclosure, each location designation RFID tag 30, 32 may be placed in a small recess in a floor of the environment 10 (*e.g*., a concrete floor). In view of the lesser thickness of the location designation RFID tags 30, 32 compared to RFID tags traditionally used in the field, though, the depth required for the recess to accommodate the tag may be less than that traditionally believed to be necessary to fully embed a location designation RFID tag 30, 32 in the floor. In some aspects, each recess may be formed in the floor to accommodate the dimensions of a single location designation RFID tag 30, 32. That is, each recess may be formed with length and width corresponding to that of the location designation RFID tag 30, 32, and each recess may have a depth similar to an overall thickness of the location designation RFID tag 30, 32 (*e.g*., a depth corresponding to the overall tag thickness plus an additional thickness of an epoxy or other bonding agent to secure the location designation RFID tag 30, 32 in the recess).

Alternatively, in some aspects, an elongated recess (or "groove") may be formed in the floor to accept multiple location designation RFID tags 30, 32 along a length of the groove, with the groove being formed at a width corresponding to one of the length of the width of the location designation RFID tag 30, 32, and a depth similar to the overall thickness of the location designation RFID tag 30, 32 (e.g., the tag thickness plus the bonding agent thickness in portions of the groove where a tag is disposed). With reference to FIG. 1, a groove may be formed, for example, along and parallel to entrances of the loading bays 16, so as to receive each of the location designation RFID tags 32. As another example, a groove may be formed along and parallel to front edges of the bays 14A-14C, so as to receive each of the location designation RFID tags 30 that signify the bays 14A-14C. Alternatively, a groove may be formed perpendicular to the front of the bays illustrated in FIG. 1, for example to receive the location designation RFID tags signifying bays 14A, 14D, 14G, 14J, 14M, 14P, 14S, and/or 14V.

In any case, in view of the lesser thickness of the location designation RFID tags 30, 32 of the present disclosure, the placing of the location designation RFID tags 30, 32 within a shallow recess of the floor of the environment 10 may provide advantages, compared to placement of the location designation RFID tags 30, 32 on the unmodified floor. For one, placing the location designation RFID tags 30, 32 within the floor may allow the floor to remain completely level with the location designation RFID tags 30, 32 placed, without extensive effort to modify the floor. Furthermore, placing the location designation RFID tags 30, 32 in the recessed floor mitigates issues with some floor surfaces may be naturally less receptive of location designation RFID tags 30, 32 placed on the unmodified floor, for example when such floor surfaces decay or otherwise fail to accept the location designation RFID tags 30, 32 when an attempt is made to adhere the location designation RFID tags 30, 32 to the unmodified floor surface. This particularly may be the case for old concrete surfaces that have not recently been renovated. Moreover, the present disclosure identifies that, when the location designation RFID tags 30, 32 are placed in the recessed floor of the environment 10 at the depths described herein, the RFID reader 20 still successfully and reliably detects the location designation RFID tags 30, 32 as forklifts 18, 180 pass the location designation RFID tags 30, 32 in the use cases described herein.

Further detail regarding the dimensions of each individual recess or elongated recess formed in this manner will be apparent from subsequent portions of the present disclosure, which discuss example dimensions of the location designation RFID tags 30, 32 and corresponding dimensions of recesses sized to accommodate the location designation RFID tags 30, 32.

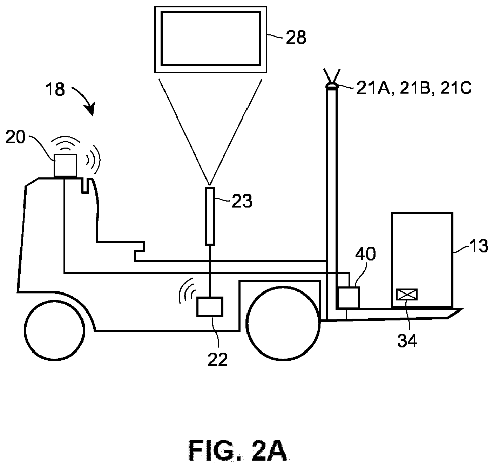

As illustrated further in FIG. 2A, which illustrates a first example aspect of a forklift 18 from FIG. 1, each forklift 18 is equipped with an RFID reader 20, a wireless communication device 22 (*e*.*g*., a wireless router or gateway), and a user interface device 23 including a display or interface screen 28. Although a forklift 18 is illustrated, the equipment described herein may be placed on any movable device capable of moving and/or tracking products in the environment 10. The RFID reader 20 may, for example, be disposed on or near a top of the forklift 18, for example by attaching the RFID reader 20 to a first side of a plate, with the plate having a magnet on a second side of the plate to releasably attach the RFID reader 20 to the forklift 18 or to other surfaces capable of interacting with the magnet. As illustrated in FIG. 2A, the RFID reader may be in communication with one or more antennas 21 disposed on the forklift 18 for detecting and reading location designation RFID tags 30, 32 and product designation RFID tags 34 disposed throughout the environment 10. In the aspect of FIG. 2A, the one or more antennas 21 are illustrated as antennas 21A-21C.

The antennas 21 may be placed around the forklift 18 to minimize interference with the operation of the forklift 18 and to ease maintenance should the antennas 21 need to be replaced. In particular, for example, multiple front facing antennas 21A, 21B, 21C are placed toward the front end of the forklift 18 (i.e., towards the tongs of the forklift 18) to detect and read an RFID tag placed on a product 13, to detect and read an RFID tag placed on the storage shelf 12 and the bays 14, to detect and read an RFID tag placed near a loading bay 16, and to detect and read an RFID tag placed on a floor of the environment 10 near storage shelf 12, the bays 14, and the loading bay 16. In some examples, a plurality of antennas can be placed towards the rear end of the forklift 18 (i.e., the side opposite the tongs of the forklift 18) to detect and read one or more RFID tags placed on the storage shelf 12 and the bays 14. Further, each of the multiple antennas 21 may be coded to detect and selectively read only RFID tags placed on products 13 and near the loading bays 16 or only RFID tags placed on the storage shelf 12 and the bays 14. For example, the front facing antenna 21A can be coded to read only RFID tags disposed on products 12 and near the loading bays 16, and the front facing antennas 21B, 21C can be coded to detect and read only RFID tags placed on the storage shelf 12 and the bays 14. The antennas 21 also may have a detection radius of, for example, four feet. As a result of the detection radius of the antennas 21, the front facing antenna 21A and the plurality of rear facing antennas 21B, 21C may be selectively turned on by, or used by, the RFID reader 20 to limit the amount of RFID tags that are being read by the RFID reader 20 when the forklift 18 is around many products 13 or between shelves 12 or bays 14 of the shelves 12. Thus, the multiple antennas 21 help determine the position of the forklift 18 in the environment 10 and, in turn, the location of the product 13. Further, the antennas 21A, 21B, and 21C may be oriented in different directions to read RFID tags placed on various surfaces (*e*.*g*., shelves, bays, loading bays, flood, ceiling, etc.). For example, the front facing antenna 21A can be oriented to point straight ahead of the forklift 18, the front facing antenna 21B can be oriented to point above the forklift 18, and the front facing antenna 21C can be oriented to point below the forklift 18. It will be appreciated that the antennas 21A, 21B, and 21C may also be oriented to point to the left and right of the forklift 18.

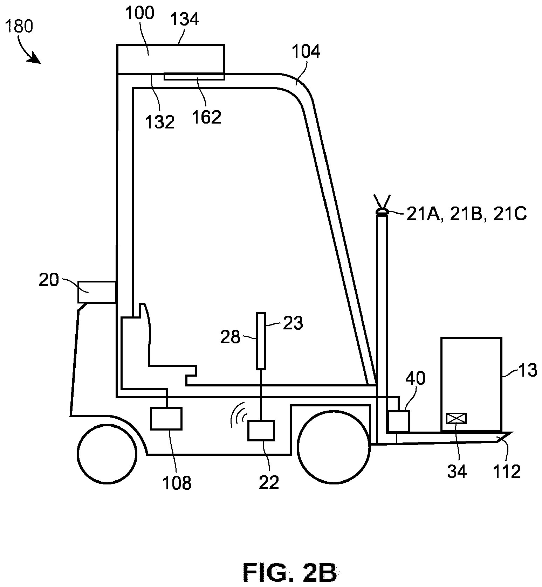

The wireless communication device 22 communicates with wireless nodes or gateway devices 24 in the environment 10 (as illustrated in FIG. 1), for example regarding product orders provided to the forklift 18 and/or products and locations detected by the RFID reader 20 and antennas 21. The user interface device 23 is typically disposed in a position on the forklift 18 that is viewable and accessible by the forklift operator, *e*.*g*., to the right side of the forklift operator. The user interface 23 may be a standalone, portable computing device, such as a laptop, a tablet device, a phone or other handheld device, etc., but this user interface device 23 could be incorporated into the forklift 18, if so desired. The user interface device 23 includes a remote tracking and communication application that executes on a processor to communicate with the asset tracking and management device 26, the RFID reader 20, and the wireless communication node or device 22 on the forklift 18 to perform various tasks associated with moving and tracking products throughout the environment 10. The display or interface screen 28 of the user interface device 23 visually presents information to the forklift operator or other user, and may include a speaker or other audible device that may be used to provide sounds, alarms, etc. to the forklift operator or other user and an operator input device, such as a touch screen, a keyboard, etc., that may be used to accept inputs from the forklift operator or other user. As also illustrated in FIG. 2, the user interface device 23 is communicatively coupled to the RFID reader 20 and to the wireless communication device 22. Example interfaces associated with presenting information to and receiving inputs from the forklift operator are provided in U.S. Patent No. 11,358,067 and U.S. Patent No. 11,023,851.

Referring back to FIG. 1, the wireless communication nodes or gateways 24 may be located at various locations within the environment 10, such as on the shelves 12, hanging from the ceiling, disposed near the loading bays 16, etc., or may be located in any other positions that provide wireless communication coverage in any known manner throughout the area covered by the environment 10 (and particularly the area traversed by the forklifts 18, 180). The wireless communication device 22 on the forklift 18, 180 and the wireless communication nodes or gateways 24 may communicate using any desired wireless communications standard, such as an 802.11 protocol, a TCP/IP protocol, a Bluetooth protocol, any Wi-Fi protocol, etc.

Referring again to FIG. 2A, the forklift 18 also includes a sensor-based detection device 40, (which may be, for example, a laser-based detection device, an optical detection device, etc.) disposed on the front of the forklift 18 and positioned to detect the existence of a product 13 loaded on the forklift 18, i.e., loaded on or positioned on the lift or tongs of the forklift 18, and to detect the presence of a product 13 disposed near the forklift 18, *i*.*e*., near the lift or tongs of the forklift 18 that has not been loaded on the lift or tongs of the forklift. If the detection device 40 is a laser based detection device, the detection device 40 may have a laser transmitter that directs a laser beam toward the product 13 on the forklift 18 and a detector that detects reflected light from the product 13. The detection device 40 may detect the presence of a product 13 on or near the forklift 18 via a sensor that senses the reflection. When no product 13 is on or near the forklift 18, the laser beam does not reflect off of any product close to the detection device 40, and thus, the laser beam is sent into space where the beam is diffused enough that, to any extent that the beam reflects back, the beam does not reflect back in a magnitude that would indicate to the detection device 40 that a product is on or near the forklift 18. However, if a product 13 is on or near the forklift 18, the light reflects back at a high enough magnitude to be sensed by the detection device 40, and accordingly, the detection device 40 determines that a product 13 is on or near the front of the forklift 18.

Alternatively, other types of sensors may be used in the detection device 40, including for example one or more weight sensors on the forklift 18. In these examples, the system may further determine how much product was delivered at a particular location. In particular, the tracking system records a first weight when a product 13 is first picked up and a second weight when the product 13 is delivered. The tracking system then determines a different between the first weight and the second weight, thereby calculating an amount (*i*.*e*., weight) of product that was dropped off. The tracking system may record the amount of product in one or more memories. In other aspects, one or more electromagnetic sensors may use other wavelengths of electromagnetic energy to detect the presence of a product on or near the forklift 18. Still additionally or alternatively, the one or more sensors may include one or more sonic detectors, one or more optical detection devices, one or more temperature sensors, and/or other sensors capable of detecting a product on or near the forklift 18 and communicating with other components on the forklift 18 regarding the presence of the product on or near the forklift 18. Still yet additionally or alternatively, the one or more sensors may include one or more sonar sensors configured to detect a product based upon reflection of audible and/or inaudible sounds waves emitted by the sensor(s), and/or one or more lidar-based sensing devices configured to detect a product via two- or three-dimensional imaging based upon reflection of lasers emitted by the lidar-based sensing device(s). In any case, the one or more sensors may include a wireless communication module configured to communicate directly or indirectly with the RFID reader 20 and/or antennas 21 (*e*.*g*., via 2.4 GHz communications, 900 MHz communications, 5.8 GHz communications, and/or communications based upon other frequencies) to cause the RFID reader 20 and/or antennas 21 to read an RFID tag of an object upon the one or more sensors detecting the presence of the object on or near the forklift 18. In other aspects, though, the one or more sensors may use wired communications to communicate with other components on the forklift 18 using similar techniques.

Specifically, though in some envisioned aspects, the detection device 40 includes one or more photoelectric sensors mounted to the forklift 18, for example via a magnetic bracket, an adhesive, and/or another securing structure(s). More specifically, the photoelectric sensor is mounted near the tongs of the forklift 18 or at least in a line of sight near the tongs of the forklift. The photoelectric sensor can operate in a diffuse mode, where an object is detected on or near the forklift 18 when the object reflects light energy emitted by the sensor (*e*.*g*., a laser) back to the sensor. Additionally or alternatively, the photoelectric sensor can operate in a retroreflective mode, where the detection device 40 further includes a reflector arranged in a path of light emitted by the sensor (*e*.*g*., across the tongs of the forklift 18), and where an object is detected on the tongs when the object blocks the emitted light. In either case, when the photoelectric sensor detects an object on or near the forklift 18, the photoelectric sensor wirelessly (and/or wiredly) communicates directly or indirectly with the RFID reader 20 and/or antennas 21 to cause the RFID reader 20 and/or antennas 21 to read an RFID tag of the object on or near the forklift 18. The photoelectric sensor may, for example, include a wireless communication module that communicates using 900 MHz or 2.4GHz wireless communications, and/or other communication frequencies. The photoelectric sensor may be powered by an internal battery, or alternatively, by a battery of the forklift (*e*.*g*., battery 108 as will be described with respect to FIG. 2B). Advantageously, in aspects where the photoelectric sensor is battery-operated and communicates wirelessly with the other components on the forklift 18, the photoelectric sensor can be installed simply by mounting the sensor and ensuring the sensor can communicate with the other components on the forklift 18 as necessary. Moreover, while a weight sensor typically involves many steps to secure and calibrate the weight sensor to the forklift because the weight sensor will be in mechanically proximal to a load being placed on the forklift 18 (thus straining the weight sensor), the photoelectric sensor may be mounted with greater confidence that operation of the forklift 18 will not dislodge or decalibrate the sensor.

In any case, the detection device 40 may be placed in a location on the front of the forklift 18 that minimizes the possibility of damage due to shifting or sliding products 13 that are picked up by the forklift 18. The detection device 40 may also be covered or otherwise protected to minimize impact damage from products picked up by the forklift 18. As illustrated in FIG. 2A, the detection device 40 is communicatively coupled to the user interface device 23 on the forklift 18, and communicates signals (wiredly or wirelessly) indicative of the presence or lack of presence of a product 13 on the tongs or lift of the forklift 18. In some aspects, when the detection device 40 indicates that a product 13 is present on or near the forklift 18, the detection device 40 responsively causes the RFID reader 20 to turn on via direct or indirect communications with the RFID reader 20. The RFID reader 20 then turns on the antennas 21 to read the product designation RFID tag 34 disposed on the product 13 that is on the tongs or lift of the forklift 18 or near the front of the forklift 18. After the RFI D reader 20 reads the product designation RFID tag 34, the RFID reader 20 may query the tracking application 36 via the communication network using the communication devices 22 and 24.

Once queried, the tracking application 36 may analyze the received product designation RFID tag 34 information with respect to data stored in the product and order database 27 to determine if the forklift operator picked up the correct product. The user interface device 23 may then visually and audibly alert the forklift operator regarding whether the operator picked up the correct product. Further information regarding the operation of the tracking application 36 is found in each of U.S. Patent No. 11,358,067 and U.S. Patent No. 11,023,851.

In some aspects, the forklift 18 does not include the detection device 40. For example, in an aspect, the RFID reader 20 can be in an activated, or "on" state, constantly while the forklift 18 is in use, such that the RFID reader 20 and/or antennas 21 can detect RFID tags any time while the forklift is in use. In another aspect, the forklift operator can selectively turn on (or off) the RFID reader 20. For example, the forklift operator may interact with the interface screen 28 of the user interface device 23 (*e*.*g*., by touching, pressing, swiping, clicking, etc. the interface screen 28) after a product 13 is on the tongs of the forklift 18 or when a product 13 is near the forklift 18. The forklift operator can selectively turn off the RFID reader 20 by interacting with the interface screen 28 of the user interface device 23 once the RFID reader 20 identified the product 13 being transported or near the forklift 18.

Referring now to FIG. 2B, a second, alternative aspect of a forklift 180 of FIG. 1 is illustrated. The forklift 180 in FIG. 2B includes numerous components similar to that of the first aspect of the forklift 18 described with respect to FIG. 2A. For example, the forklift 180 as illustrated in FIG. 2B includes the RFID reader 20, the wireless communication device 22, and the user interface device 23 including the display or interface screen 28. The forklift 180 as illustrated in FIG. 2B also includes the sensor-based detection device 40 to facilitate the detection of the product 13 on tongs 112 of the forklift 180 or otherwise near the forklift 180. Unless stated otherwise, these components on the second aspect of the forklift 180 of FIG. 2B may operate in a manner similar to that described for the forklift 18 in the present disclosure.

In the aspect of FIG. 2B, however, the installation and operation of electronic components on the forklift 180 (or other vehicle) is simplified by providing at least some of the electronic components in a single compact, ruggedized container 100 mountable to the forklift 180 (e.g., to a top of a cage 104 of the forklift). For example, the container can include a voltage converter, regulator, charge guard, transmitter/controller and, in some cases, the RFID reader. The container includes intuitive connection ports to facilitate electrical connection between components within the container and components outside the container, such as the user interface device 23, detection device 40, a forklift battery 108 (which may supply power to components within the container 100), and in some aspects, the RFID reader 20.

Generally speaking, the compact container 100 converts battery power from a forklift battery 108 to power the RFID reader 20, detection device 40, and user interface device 23 carried by the forklift 180. Additionally, the container 100 facilitates communication between the transmitter/controller, detection device 40, RFID reader 20, and portable user interface device 23. In some aspects, the container 100 can include a backup battery disposed therein, e.g., to provide power to the container 100 while the forklift 180 is not operating and/or when the forklift battery 108 is depleted. Furthermore, in some aspects, the container 100 can include a charge guard to protect the forklift battery 108 (and/or the charge guard in the container 100) from excess discharge due to power draw by the container 100. For example, the charge guard may be configured to prevent power draw by the container 100 from the forklift battery 108 and/or backup battery of the container 100 while the forklift 180 is not operating (or alternatively, after a preconfigured duration of time after the forklift 180 is not operating, *e*.*g*., fifteen minutes).

The container 100 is integrated into the RFID-based tracking system by electronically and communicatively connecting various components carried by the forklift 180. For example, the detection device 40 mounted on the forklift 180 detects when a product 13 is near or on the tongs 112 of the forklift 180, and sends a signal to the transmitter/controller disposed in the container 100 upon such a detection. The transmitter/controller communicates the information from the detection device 40 to the user interface device 23, and also signals to the RFID reader 20 to turn on and begin reading RFID tags, via the antennas 21. When an antenna 21 reads the product designation RFID tag 34 on the product 13, the RFID reader 20 locks onto the RFID tag 34 and communicates the information to the user interface device 23, which relays the information to the asset tracking and management device 26. The asset tracking and management device 26 analyzes the information received, and communicates to the operator via a user interface at the user interface device 23 whether the product 13, which the forklift 180 is near or is carrying, is a correct product associated with an order to be filled. Similarly as to described in FIG. 2A, the detection device 40 in some aspects includes a photoelectric sensor secured to the forklift 18, and the photoelectric sensor wirelessly communicates with components of the container 100 and/or other components on the forklift 18 to facilitate detection of an object on or near the forklift 180 and reading of an RFID tag on the object. Further information regarding electrical connections involving the container 100 and operation of the forklift 180 with the container 100 installed thereupon is provided in U.S. Patent Application No. 18/093,711.

The container 100 may be easily attached or mounted to the forklift 180 to facilitate set up on-site. The container 100 may include a magnet 162 to attach the container 100 to the cage 104 of the forklift 180. The magnet 162 can be any magnet strong enough to attach the container 100 to a magnetic surface, such as, for example, a rare earth magnet. To assemble, an operator may first attach the container 100 to a magnetic surface of the forklift 180, such as the top of the cage 104 (*e.g.,* via one or more of walls 132, 134 of the container 100). Then, the operator may make the electrical connections via intuitive, preconfigured wires and connectors provided in the container 100. The container 100 may be additionally or alternatively be mounted to the forklift 180 in other ways such as, for example, clamps, screw plates, adhesive, welding, zip-ties, plastic-ties, tape, hook-and-loop fasteners, hooks, hangers, or any combination mounting techniques. Preferably, the container 100 is mounted to the forklift 180 in a fixed manner to prevent the container, once mounted, from moving with respect to the forklift 180, while still allowing the container 100 to be released from the forklift 180 when desired. In some cases, the container 100 may include a soft material, such as rubber or foam, disposed thereon which is disposed adjacent to the forklift 180 when the container 100 is mounted on the forklift 180. This soft material may act like a shock absorber to reduce the amount or intensity of shocks imparted to the container 100 by the forklift 180 during movement and/or use of the forklift 180. Within the container 100, components of the container 100 are protected by the walls of the container, and the connections between the container and external components are secured through locking mechanisms. Moreover, the internal components may be welded, glued, fastened, or otherwise secured within the container in a manner that makes them less susceptible to movement and electrical disconnections during use, thereby making the components ruggedized.

Although forklifts 18, 180 are described with respect to FIGS. 2A and 2B, it should be appreciated that the forklifts 18, 180 may be replaced with other movable devices capable of moving/detecting products and having components described herein installed thereupon (e.g., reach lifts, pallet jacks, etc.).

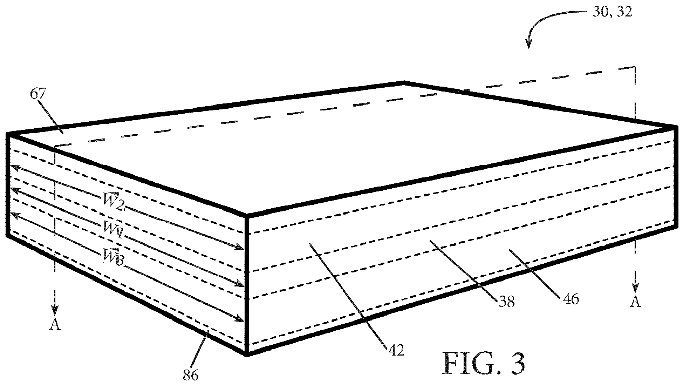

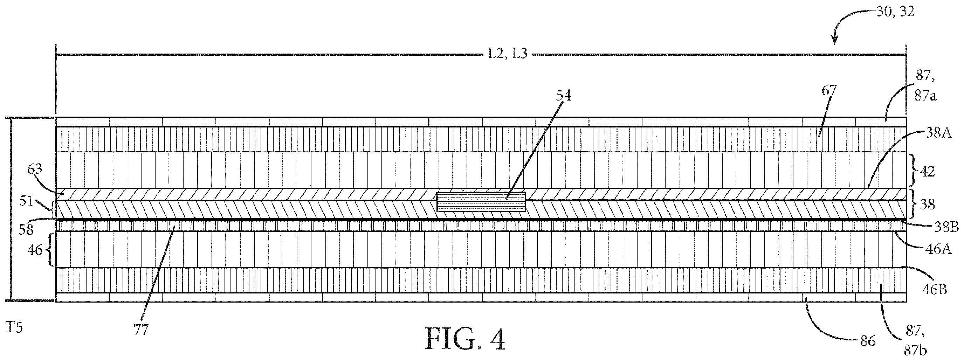

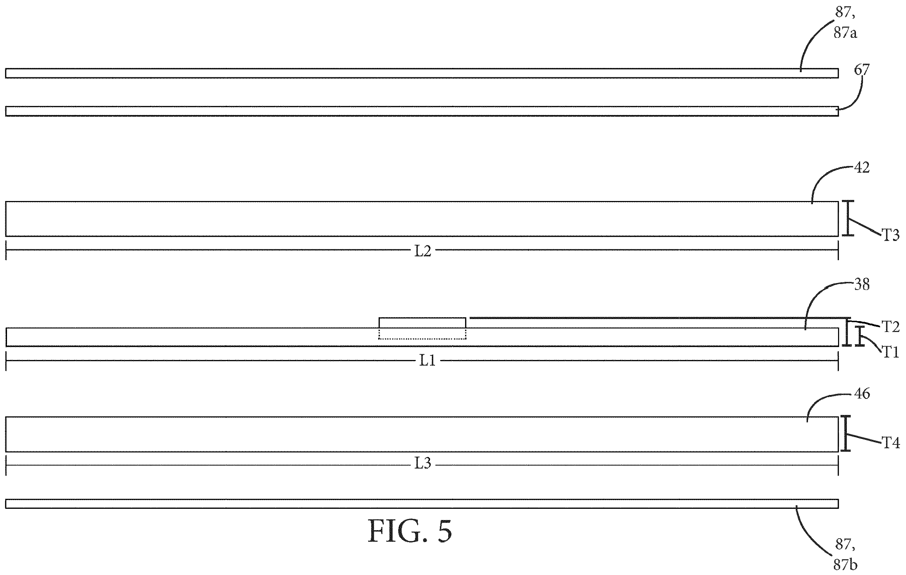

FIGS. 3-6 illustrates an example location designation RFID tag 30, 32 for use in the inventory tracking system described above. In particular, FIG. 2 illustrates a perspective view of a single location designation RFID tag 30, 32; FIG. 3 illustrates a cross-sectional view of the location designation RFID tag 30, 32 of FIG. 2 along a line A-A; FIG. 4 illustrates an exploded view of the location designation RFID tag 30, 32 of FIG. 2; and FIG. 5 illustrates a top view of the location designation RFID tag 30, 32 of FIG. 2. The location designation RFID tag 30, 32 may be placed anywhere in the environment 10 to mark, or designate, a particular location within the environment 10 because of an adhesive disposed on a side of the location designation RFID tag 30, 32. In particular, according to techniques of the present disclosure, the location designation RFID tag 30, 32 may be placed on the floor of a storage and shipping environment (*e*.*g*., environment 10 of FIG. 1), or in a recess formed of the floor of the environment, with the recess being formed to a depth equal to or not much greater than an overall thickness of the location designation RFID tag 30, 32. Referring back to FIG. 1, a recess in the floor of the environment may be formed, for example, at or near a shelf 12, at or near a particular bay 14A-X of a shelf 12, and/or at or near a particular loading bay 30 to designate that location as a point of interest within the environment.

As best illustrated in FIGS. 4 and 5, the location designation RFID tag 30, 32 generally includes an inlay 38, a first layer 42 adhered to a first side 38A of the inlay 38, and a second layer 46 adhered to a second side 38B of the inlay 38. In particular, the inlay 38 includes an antenna 51, an RFID chip (or integrated circuit) 54 conductively bonded to the antenna 51, and a substrate 58 on which the antenna 51 and the RFID chip 54 are disposed. The conductive bond communicatively couples the antenna 51 and the RFID chip 54 such that the antenna 51 receives the interrogation signal and power therewith sent by an RFID reader 20 and transmits the received interrogation signal and power to the RFID chip 54. In turn, the antenna 51 receives an interrogation response signal from the RFID chip 54 and transmits the received interrogation response signal to the RFID reader 20. As discussed above in relation to FIG. 1, the RFID reader 20 that reads and detects various location designation RFID tags 30, 32 may be placed on the forklift 18, 180. Because the forklift 18, 180 is often moving quickly throughout the environment, it is desirable to ensure a strong communication connection between the RFID reader and the location designation RFID tags 30, 32. It has been found that inlays 38 having a length L1 (FIG. 5) and a width W1 (FIG. 3) that create a large surface area for the RFID reader 20 to detect may help facilitate the strong communication connection. For example, the length L1 (FIG. 5) of the inlay 38 can be between 1 and 10 inches (25.4 to 254 mm) and the width W1 (FIG. 3) of the inlay 28 can be between 0.10 and 10 inches (2.54 and 254 mm) and, in particular, the length L1 (FIG. 5) can be between 3 and 4 inches (76.2 and 101.6 mm) and the width W1 (FIG. 3) can be between 0.30 and 1 inches (7.62 and 25.4 mm). In other examples, the length L1 (FIG. 5) of the inlay 38 can be approximately 3.25 inches (82.55 mm), 3.55 inches (90 mm), 3.87 inches (98.18 mm), etc., and the width W1 (FIG. 3) of the inlay 38 can be approximately 0.48 inches (12.31 mm), 0.50 inches (12.70 mm), 0.75 inches (19 mm), etc.

Examples of antennas 51 that can provide a sufficiently strong communication connection between the location designation RFID tag 30, 32 and the RFID reader include a squiggle antenna, a squiglette antenna, a squiglette-E antenna, a short squiggle antenna, an express squiggle antenna, or a squig antenna. In particular, the antenna 51 can be an Alien Squiggle version 9740 or 9840, an Alien Document inlay version 9841, an Alien Garment Tag Inlay versions 9827, an AD-661r6 UHF RFID inlay, or an AD-661r6-P UHF RFID inlay. The RFID chip 54 can, for example, be a Higgs^{™} 9 RFID tag IC, a Higgs^{™}-EC RFID tag IC, an Impinj Monza r6, or an Impinj Monza r6-P.

Moreover, the inlay 38 may also have an antenna thickness T1 (FIG. 5) that corresponds to the distance from the bottom surface of the inlay 38 to the top surface of antenna 51 and an RFID chip thickness T2 that corresponds to the distance from the bottom surface of the inlay 38 to the top surface of the RFID chip 54. For example, the antenna thickness T1 (FIG. 5) can be between 0.0039 to 0.0197 inches (0.10 to 0.50 mm) and the RFID chip thickness T2 (FIG. 5) can be between 0.010 to 0.0394 inches (0.254 to 1 mm), and, more particularly, in some aspects, the antenna thickness T1 (FIG. 5) can be approximately 0.0063 inches (0.16 mm) and the RFID chip thickness T2 (FIG. 5) can be approximately 0.014 inches (0.36 mm).

As illustrated in FIGS. 4 and 5, the location designation RFID tag 30, 32 has the first layer 42 disposed on the first side 38A of the inlay 38 and the second layer 46 disposed on the second side 38B of the inlay 38. In particular, the first layer 42 is adhered to the first side 38A of the inlay 38 using a first adhesive 63 such as, for example, a heat activated adhesive, an epoxy, a pressure sensitive adhesive, or any other mechanical means. So configured, the first layer 42 may help reduce, or absorb, impact in the event that the forklift 18, 180 drives over the location designation RFID tag 30, 32 thereby protecting the underlying inlay 38 and potentially extending the useful life of the location designation RFID tag 30, 32. Accordingly, it is desirable that the first layer 42 be made of a material strong enough to withstand the weight of the forklift 18, 180, or other heavy machinery, driving over the location designation RFID tag 30, 32 yet conducive enough to allow the RFID reader 20 to establish a communication connection strong enough to properly transmit the interrogation signal to and receive the interrogation response signal from the location designation RFID tag 30, 32. Such material properties can be achieved by forming the first layer 42 from, for example, a durable thermoplastic material such as a semi-rigid polyester, a rigid polyvinyl chloride (PVC), a polycarbonate, a polyethylene, or a polypropylene.

Further, the first layer 42 includes a length L2 (FIG. 4) and a width W2 (FIG. 3) that extend past, or encapsulate, the inlay 38 thereby providing additional protection of the inlay 38. For example, the length L2 (FIG. 4) of the first layer 42 can be between 2 and 10 inches (50.8 and 254 mm)), 3 to 8 inches (76.2 to 203.2 mm), 4 to 7 inches (101.6 to 177.8 mm), 5 to 10 inches (127 to 254 mm), 6 to 9 inches (152.4 to 228.6 mm), 4 to 8 inches (101.6 to 203.2 mm), and the width W2 (FIG. 3) of the first layer 42 can be between 0.5 and 5 inches (12.7 and 127 mm), 1 to 3 inches (25.4 to 127 mm), 2 to 5 inches (50.8 to 127 mm), 3 to 4 inches (76.2 to 101.6 mm). In particular, the length L2 (FIG. 4) of the first layer 42 may be approximately 4 inches (101.6 mm) and the width W2 (FIG. 3) of the first layer 42 may be approximately 1 inch (25.4 mm).

It is desirable that the first layer 42 of the claimed location designation RFID tag 30, 32 includes a thickness T3 such that any modification of a floor of the environment to accommodate the location designation RFID tag 30, 32 be minimally laborious and make minimal modification to the floor. Moreover, in the case that the location designation RFID tag 30, 32 is attached to an unmodified floor of the environment, it is desirable that the thickness T3 be such that the forklift 18, 180, or other heavy machinery, moving through the environment may drive over the location designation RFID tag 30, 32 with minimal, or without any, disturbances. So configured, the thickness T3 of the first layer 46 can, for example, be between approximately 0.10 and 1 inches (2.54 and 25.4 mm), between 0.10 and 0.30 inches (2.54 and 7.62 mm), and, more particularly, the thickness T3 of the first layer 42 can be approximately 0.1095 inches (2.78 mm). In some aspects, the thickness T3 may be substantially less than 0.10 inches.

The second layer 46, illustrated in FIGS. 4 and 5, is similar to the first layer 42 in that the second layer 46 is adhered to the inlay 38 using a second adhesive 77, but, unlike the first layer 42, the second layer 46 is adhered to the second side 38B of the inlay 38. In particular, a first side 46A of the second layer 46 is adhered to the second side 38B of the inlay 38 using the second adhesive 77 such as, for example, a heat activated adhesive, an epoxy, or a pressure sensitive adhesive. So configured, the second layer 46 may aid the first layer 42 in reducing, or absorbing, impact as the forklift 18, 180 drives over the location designation RFID tag 30, 32. Accordingly, it is desirable that the second layer 46 be made of a material that is strong enough to withstand the weight of the forklift 18, 180, or other heavy machinery, driving over the location designation RFID tag 30, 32. Such material properties may be achieved by forming the second layer 46 from, for example, a durable thermoplastic material such as a semi-rigid polyester, a rigid polyvinyl chloride (PVC), a polycarbonate, a polyethylene, or a polypropylene.

Further, the second layer 46 includes a length L3 (FIG. 4) and a width W3 (FIG. 3) that extend past, or encapsulate, the inlay 38. In particular, the length L3 (FIG. 4) and width W3 (FIG. 3) of the second layer 46 may be substantially equal to the length L2 (FIG. 3) and the width W2 (FIG. 3) of the first layer 42. In other words, the length L3 (FIG. 4) of the second layer 46, for example, can be between 2 and 10 inches (50.8 and 254 mm), 3 to 8 inches (76.2 to 203.2 mm), 4 to 7 inches (101.6 to 177.8 mm), 5 to 10 inches (127 to 254 mm), 6 to 9 inches (152.4 to 228.6 mm), 4 to 8 inches (101.6 to 203.2 mm), and the width W3 (FIG. 3) of the second layer 46 can be between 0.5 and 5 inches (12.7 and 127 mm), 1 to 3 inches (25.4 to 127 mm), 2 to 5 inches (50.8 to 127 mm), 3 to 4 inches (76.2 to 101.6 mm). More particularly, the length L3 (FIG. 4) of the second layer 46 may be approximately 4 inches (101.6 mm) and the width W3 (FIG. 3) of the second layer 46 may be approximately 1 inch (25.4 mm). However, in some examples, the length L3 (FIG. 4) and the width W3 (FIG. 3) of the second layer 46 can be different than the length L2 (FIG. 4) and the width W2 (FIG. 3) of the first layer 42.

Known RFID tags have been used with limited success when placed on a floor (e.g., a concrete floor) of a storage facility because the floor may "detune" the RFID tag, which undesirably inhibits an RFID reader from establishing a strong communication connection with the RFID tag disposed on the floor. Disposing the second layer 46 on the second side 38B of the inlay 38 (i.e., between the floor of the environment 10 and the inlay 38) advantageously creates a barrier between the inlay 38 and the floor, which may prevent, or at least mitigate, detuning of the location designation RFID tag 30, 32. It is therefore important that a thickness T4 of the second layer 46 creates a sufficient barrier between the floor and the inlay 38 to prevent, or at least mitigate, detuning of the location designation RFID tag 30, 32. It has been found that, for example, the thickness T4 (FIG. 5) of the second layer 46 can be between 0.10 and 1 inches (2.54 and 25.4 mm), between 0.10 and 0.30 inches (2.54 and 7.62 mm), and, more particularly, the thickness T4 of the second layer 46 can be approximately 0.1095 inches (2.78 mm). In some aspects, the thickness T4 may be substantially less than 0.10 inches.

In some aspects, as illustrated in FIG. 4, a second side 46B of the second layer 46 includes a third adhesive 86 such as, for example, cyanoacrylates, structural acrylic adhesives, or epoxy adhesives, disposed thereon. The third adhesive 86 may particularly be present when the location designation RFID tag 30, 32 is to be placed on the unmodified floor. The third adhesive 86 may be a semi-permanent adhesive that acts similar to a permanent adhesive in that the third adhesive 86 makes it difficult for the location designation RFID tag 30, 32 to be removed from the floor accidently, whether the location designation RFID tag is disposed on the unmodified floor or within a recess formed in the floor. However, the third adhesive 86 may be releasable enough that the location designation RFID tag 30, 32 may be removed from the floor using a scraper, and then reapplied using a spray adhesive. While the third adhesive 86 has been discussed as releasably attaching the location designation RFID tag 30, 32 to the floor of the environment 10, in other examples, the third adhesive 86 can permanently attach the location designation RFID tag 30, 32 to the floor of the environment 10 (*e*.*g*., to the unmodified floor or to the recessed floor).

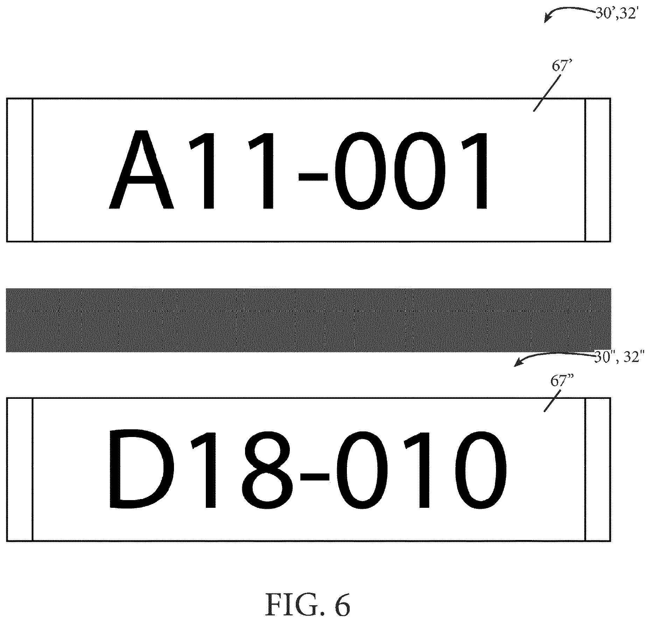

Additionally, as illustrated in FIG. 6, the location designation RFID tag 30, 32 includes a printing layer 67 that may have words, letters, phrases, and/or numbers that visually convey information about the particular location designation RFID 30, 32 to a user. It is desirable that a location designation RFID tag 30, 32 be able to visually convey information about the particular location designation RFID tag 30, 32 because doing so may aid in the placement of the location designation RFID tags 30, 32 around the environment 10 and as well as aid a forklift driver in determining where they are in the environment 10. The printing layer 67 may be disposed on the first layer 42 using a similar attachment technique as discussed above with regard to adhering the first layer 42 or second layers 46 to the inlay 38. For example, the printing layer 67 can be adhered to the first layer 42 using a heat activated adhesive, an epoxy, or a pressure sensitive adhesive. The printing layer 67 may be between 0.001 and 0.010 inches (0.0254 to 0.254 mm) thick and, more particularly, may be approximately 0.003 inches thick (0.0762 mm). The printing layer 67 may also disguise the location designation RFID tag 30, 32 such that the location designation RFID tag 30, 32 blends in with the area surrounding the placed location designation RFID tag 30, 32. For example, if the location designation RFID tag 30, 32 is placed on or within a concrete floor, the printing layer 67 can be colored gray to help the location designation RFID tag 30, 32 blend in with the floor. In other examples, the printing layer 67 may be the top surface of the first layer 42 provided that the first layer 42 is made of a material capable of being printed on.

After coupling the printing layer 67 to the first layer 42, the first layer 46 to the inlay 38, and the second layer 46 to the inlay 38 (i.e., once the location designation RFID tag 30, 32 is assembled) the location designation RFID tag 30, 32 has an overall thickness T5 (FIG. 4). In particular, the overall thickness T5 may vary depending on the RFID chip thickness T2, the thickness T3 of the first layer 42, and the thickness T4 of the second layer 46. However, it is desirable, for reasons discussed extensively above, that the RFID chip thickness T2, the thickness T3 of the first layer 42, and the thickness T4 of the second layer 46 be such that the overall thickness T5 allows for any modification to the floor to accept the RFID tag 30, 32 be minimally laborious and minimally disturbing to the floor, and moreover, allows for the forklift 18, 180 to drive over the location designation RFID tag 30, 32 with little to no disturbances. In some aspects, for example, the overall thickness T5 may be approximately 0.02 inches (0.508 mm). In other aspects, the overall thickness T5 may be approximately 0.03 inches (0.762 mm) or 0.04 inches (1.016 mm). In other aspects, the overall thickness T5 can be between 0.10 and 0.50 inches (2.54 and 12.7 mm), between 0.20 and 0.30 inches (5.08 and 7.62 mm) and more particularly approximately 0.236 inches (5.99 mm).

The assembled location designation RFID tag 30, 32 is subsequently placed in an environment for use in an RFID-based tracking system. Particularly, according to techniques of the present disclosure, the location designation RFID tag can be placed in a recess in the floor of the inventory shipping and storage environment (or other environment) in which the RFID-based tracking system is implemented. The location designation RFID tag 30, 32 may be covered with an epoxy, which may assist in securing the location designation RFID tag 30, 32 and fill any remaining gap between the top of the RFID tag 30, 32 and the floor, to bring the placed RFID tag 30, 32 substantially level with the floor. The epoxy may be a clear epoxy, to allow the printing layer 87 to remain visible to personnel even if covered by the epoxy.

Traditionally, it has been understood that drilling a recess into the floor of the environment to allow the floor to receive the location designation RFID tag carries a number of drawbacks. The heavy construction traditionally required to drill the floor (*e*.*g*., to a depth of 0.25 inches or more) and place an RFID tag disadvantageously requires considerable work to add, move, and/or replace the RFID tag around the environment, and may permanently deface the floor of the environment when the floor is to be drilled at least as deep as an overall thickness of the location designation RFID tag. Moreover, even when a location designation RFID tag is placed in a recess of the floor, the floor of the environment surrounding the placed RFID tag may prevent or otherwise inhibit the RFID tag from receiving an interrogation signal from and/or transmitting an interrogation signal to an interrogator (*e*.*g*., RFID reader 20).

However, in view of the lesser overall thickness T5 of the location designation RFID tag 30, 32 compared to RFID tags traditionally used in the field, the location designation RFID tag 30, 32 of the present disclosure can be placed in the recessed floor with less labor and with less extensive modification to the floor, compared to what has traditionally been understood to be necessary in order to place a location designation RFID tag in a floor of an environment.

Particularly, the recess in the floor may be formed to an equal depth or to a depth not much greater than the overall thickness T5 of the location designation RFID tag 30, 32, such that top of the location designation RFID tag 30, 32 is level or close to level with the floor or the environment. The depth of the recess in the floor may be substantially equal to the overall thickness T5 of the location designation RFID tag 30, 32, plus the thickness of the thin bonding layer (*e*.*g*., epoxy) securing the location designation RFID tag within the recess. In some aspects, the thickness of the bonding layer is approximately 0.01 inches (0.254 mm), 0.02 inches (0.508 mm), 0.03 inches (0.762 mm), 0.04 inches (1.016 mm), or 0.10 inches (2.54 mm). Accordingly, the depth of the recess containing the placed RFID tag 30, 32 and bonding layer may be approximately 0.02 inches (0.508 mm), 0.03 inches (0.762 mm), 0.04 inches (1.016 mm), 0.10 inches (2.54 mm), or 0.125 inches (3.175 mm). In other possible aspects, the recess or at least a portion thereof may be formed at a depth of between 0.20 and 0.60 inches (5.08 and 15.24 mm), or between 0.30 and 0.40 inches (7.62 and 10.16 mm). Effectively, in any of the above cases, the top of the location designation RFID tag is at or slightly below the level of the floor surrounding the recess.

In some alternative aspects, the recess in the floor may be still yet shallower than the overall thickness T5 of the location designation RFID tag 30, 32, to allow a first portion of the location designation RFID tag 30, 32 to be contained within the floor and a second portion of the location designation RFID tag 30, 32 to be raised from the floor, with the location designation RFID tag 30, 32 still being secured via the epoxy over and/or around the location designation RFID tag 30, 32. This alternative approach may require less disturbance to the floor of the environment to place the tag, while still potentially reducing disturbance to equipment and/or personnel passing over the placed RFID tag 30.

In aspects where a recess in the floor accommodates a single location designation RFID tag 30, 32, a length and width of the recess may correspond to a length and width of the location designation RFID tag 30, 32 (*i*.*e*., a largest length or width of a component thereof). For example, in some aspects, the length of the recess is identical to the length L2 or L3 from FIG.4, and the width of the recess is equal to the width W2 or W3 from FIG. 3. The length and/or width of the recess, though, may be slightly larger than the length or width of the location designation RFID tag 30, 32 to allow the epoxy or other bonding agent to fill a small area between the edge of the location designation RFID tag 30, 32 and the edge of the recess, to thereby further secure the location designation RFID tag 30, 32 in the recess. Generally speaking, though, the length and width of the recess is substantially similar to the length and width of the location designation RFID tag 30, 32.

In aspects where an elongated recess (or groove) accommodates multiple location designation RFID tags 30, 32, a width of the groove is substantially similar to one of the length or the width of each location designation RFID tag 30, 32. That is, depending on the angular orientation of the location designation RFID tags 30, 32 within the groove, the width of the groove may be substantially equal to the length L2 or L3, or the width W2 or W3. A length of the groove may be determined based on how many location designation RFID tags 30,32 are to be placed within the groove, and based on the locations of and distances between the location designation RFID tags 30, 32 that are to be placed within the groove. Once the location designation RFID tags have been placed within the groove, portions of the groove not occupied by a location designation RFID tag may be filled via an epoxy, another bonding agent, and/or another filler material. Specifically, the unoccupied portions of the groove may be filled such that portions of the groove not occupied by a location designation RFID tag 30, 32 are level with the portions of the groove that are occupied by a location designation RFID tag, as well as with the other areas of the floor in the environment 10.

The individual recesses and/or grooves in the surface of the floor of the environment may be formed via various physical machinery. It is observed, though, that regardless of the machinery chosen, the shallower depth of the recesses of the present disclosure permits the recesses to be performed with less effort and with less heavy machinery, as compared to what has traditionally been understood to be necessary to create a hole of sufficient depth to accommodate an RFID tag for use in an RFID-based inventory tracking system.

Further description of possibilities for sizing, spacing, and angular orientation of location designation RFID tags 30, 32, and the particular components thereof, is provided in U.S. Patent No. 11,443,158.

In instances where the location designation RFID tag is placed on the unmodified floor, forklifts 34 driving over location designation RFID tags 30, 32 may leave tire marks or debris on the printing layer 67 making it difficult for an individual in the environment 10 to read and/or understand the visual indication on the printing layer 67. Similarly, a forklift operator with a tire of the forklift 18, 180 resting on the location designation RFID tag 30, 32 may unintentionally spin the tires in place (*e*.*g*., a burnout) thereby damaging, removing, loosening, and/or repositioning the location designation RFID tag 30, 32. It is therefore desirable in these cases that the location designation RFID tag 30, 32 includes a plurality of lamination layers 87 adhered to the first and second layers 42, 46 that may mitigate, and/or prevent, against such damage, removal, loosening, and/or repositioning. The plurality of lamination layers 87 may also provide protection against the elements such as water, dust, mold, etc. and chemical spills.

For example, as illustrated in FIG. 5, the plurality of lamination layers 87 can include a first lamination layer 87a adhered to the first layer 42 and a second lamination layer 87b adhered to the second layer 46. To adequately protect the location designation RFID tag 30, 32, the first and second lamination layers 87a, 87b may extend past the first and second layers 42, 46 such that when the first and second lamination layers 87a, 87b are coupled to one another, the location designation RFID tag 30, 32 is encapsulated by the plurality of lamination layers 87. So configured, an adhesive (not illustrated) may be disposed on at least one of the pluralities of lamination layers 87 instead of, or in addition to, the third adhesive 86 for attaching the laminated location designation RFID tag 30, 32 to the floor of the environment 10. The plurality of lamination layers 87 can be, for example, a rigid polyester, vulcanized fiber, phenolic, polyester, malemine resin, an epoxy, or silicone. In other examples, the location designation RFID tag 30, 32 can be laminated directly to the floor of the environment 10 using a single lamination later rather than a plurality of lamination layers 87.

In any case, after assembly, but prior to use, the location designation RFID tag 30, 32 may be programmed, or encoded, so that the RFID reader 20 may properly distinguish and/or identify one location designation RFID tag 30, 32 from another location designation RFID tag 30, 32. In particular, each location designation RFID tag 30, 32 can be encoded with a unique identifier indicative of a particular shelf 12, or bay 14A-X of the shelf 12, using, for example, text encoding, hexadecimal encoding, or serialized global trade item number ("SGTIN"). Once the location designation RFID tags 30, 32 have been encoded, it may not be possible to determine which unique identifier was encoded to which location designation RFID tag 30, 32 without the use of an RFID reader 20. It is therefore desirable that the printing layer 67 include words, letters, numbers, phrases, or any combination thereof, associated with the unique identifier printed, or otherwise disposed, thereon. So configured, the printing layer 67 may provide a visual indication of which unique identifier was encoded thereon and, ultimately, provide a visual indication of where the location designation RFID tag 30, 32 is to be placed within the environment 10.

Turning back to FIG. 6, which illustrates the printing layer 67' of a first location designation RFID tag 30, 32' and the printing layer 67" of a second location designation RFID tag 30, 32". If, for example, a user would like to place the first location designation RFID tag 30, 32" at bay "001" of shelf "A11," then the first location designation RFID tag 30, 32' can be encoded to store that information on an electronic product code ("EPC") memory of the RFID chip 54. In turn, the printing layer 67' may have a first designation such as, "A11-001" printed, or otherwise deposited thereon to visually indicate to the user where the first location designation RFID tag 30, 32" is to be placed without the use of an electronic device capable of reading and displaying the information stored in the EPC memory of the RFID chip 54. Similarly, if, for example, a user would like to place the second location designation RFID tag 30, 32" at bay "010" of shelf "D18," then the second location designation RFID tag 30, 32" can be encoded to store that information on the EPC memory of the RFID chip 54. In turn, the printing layer 67" may have a second designation such as, "D18-010" printed, or otherwise deposited thereon to visually indicate to the user where the second location designation RFID tag 30, 32" is to be placed without the use of an electronic device capable of reading and displaying the information stored in the EPC memory of the RFID chip 54.

Once all of the desired location designation RFID tags 30, 32 have been encoded and placed throughout the environment 10, the RFID reader 20 disposed on the forklift 18, 180 uses an antenna 21 disposed thereon to read and detect the information encoded on the location designation RFID tag 30, 32 within range of the antenna 21. In particular, the RFID reader 20 provides power to the antenna 21, which then sends the interrogation signal in the direction that the antenna 21 is facing. The interrogation signal transmits both power and a request signal to the antenna 51 of the location designation RFID tag 30, 32, which transmits both the power and request signal to the RFID chip 54. In response to receiving the request signal, the RFID chip 54 queries the EPC memory for the encoded information stored thereon. In turn, the antenna 51 receives the encoded information from the RFID chip 54 and transmits the interrogation response signal including the encoded information to the antenna 21, which will ultimately transmit the interrogation response signal to the RFID reader 20.

As a result of the issues experienced by known location designation tags discussed above, establishing a strong communication connection between an RFID reader and an RFID tag disposed on the floor has been met with little success. While detuning is, among other factors, what may prevent establishing the strong communication connection, the orientation of an RFID tag relative to an RFID reader plays an important role in establishing a strong communication connection. In particular, the strength of the communication connection established between the RFID reader 20 and the location designation RFID tag 30, 32 depends on the direction at which a signal arrives relative to the plane at which the antenna 51, 21 is disposed. It is therefore important that the location designation RFID tag 30, 32 not only utilize hardware components that provide the RFID reader 20 with the largest feasible surface area to reach and detect, but also to orient the location designation RFID tags 30, 32 in a manner that provides the strongest communication connection as the forklift 18, 180 with the RFID reader 20 travels throughout the environment 10. It has been determined that disposing the location designation RFID tag 30, 32 on the floor of the environment 10 at an orientation that is perpendicular to the direction the direction of travel of the forklift 18, 180 may establish a strong communication connection between the location designation RFID tag 30, 32 and the RFID reader 20 on the forklift.

So configured, the inventory tracking system operates so that, when a product is first introduced into the environment 10, the product 13 is provided with a product designation RFID tag 34. The tag ID and description, or other details, of the product 13 are stored in the asset tracking and management device 26 and in particular in the product and order database 27 in some manner by the tracking application 36. For example, an inventory manager may input this information in response to the arrival of a new product 13. In some cases, the asset tracking and management device 26 may accept a description of or other identification of a product 13, and may store this information in the product and order database 27. Then, when the product 13 arrives in the environment 10, warehouse personnel may use a user interface device 23 (which may or may not be on a forklift 18) to indicate to the tracking application 36 what product has arrived, and the tracking application 36 may store or find the product 13 in the product and order database 27 of the asset tracking and management device 26. The tracking application 36 may then instruct the person, via the user interface device 23, to place an RFID tag on the product 13 and to scan that RFID tag using an RFID reader 20 (or a handheld reader if so desired). The RFID reader 20 may then communicate with the system (e.g., via the user interface device 23 which may or may not be on a forklift 18, 180) to indicate the RFID tag number or ID for the product designation RFID tag 34 placed on the product 13. The tracking application 36 then stores that RFID tag number or ID for that product in the product database 27.

As a result, each product 13 has its own unique product designation RFID tag 34, and that product designation RFID tag 34 may be used to track the location of that product 13 within the storage environment 10. In particular, when a forklift 18, 180 picks up a product 13, for example, at the loading bay 16, the laser or other detection device 40 detects that a product 13 is currently disposed on the forklift 18 (*e*.*g*., is resting on the tongs or lift of the forklift 18, 180) and signals this pick-up event to the RFID reader 20. At this time, the detection device 40 may instruct the RFID reader 20 on the forklift 18, 180 to turn on. The RFID reader 20 then turns on the multiple antennas 21A, 21B, and/or 21C and pings or reads the RFID tag ID associated with the product designation RFID tag 34 on the product 13 that is on the forklift 18, 180. The RFID reader 20 sends this RFID tag ID to the user interface device 23 and in particular to the remote tracking application of the user interface device 23, which may then query the tracking application 36 via the wireless network devices 22 and 24, which communicates with the asset tracking and management device 26 and the product and order database 27 to determine what product 13 the forklift operator picked up and where the product 13 needs to go or to determine whether the forklift operated picked up the correct product. In this manner, the detection device 40, the RFID reader 20, and the user interface device 23 detect and inform the tracking application 36 that the product 13 with a particular RFID tag 34 is now on the forklift 18, 180.

As the forklift 18, 180 moves throughout the environment 10, the RFID reader 20, through the use of the antennas 21A, 21B, 21C, also detects the current location of the of the forklift 18, 180 by observing or detecting the closest or nearest location designation RFID tag 30 or 32 associated with one of the shelves 12 or associated with one of the loading bays 16, so long as the forklift 18, 180 has a product 13. If the forklift operator does not have the product 13 on the forklift 18, 180, the RFID reader 20 and the antennas 21A-C may remain turned off, as it may not be necessary to have the RFID reader 20 and antennas 21A-C reading RFID tags 30, 32, and 34 when there is no product 13 on the forklift 18, 180. The RFID tag reader 20 may provide or store the last detected or closest location designation RFID tag as the one with the highest return signal therefrom, but need not communicate this information to the asset tracking and management device 26 until a drop-off action occurs. More particularly, as the forklift operator drives the forklift 18, 180 to a particular bay 14 of one of the shelves 12, the RFID reader 20 in communication with the antennas 21A-C (*e*.*g*., antennas 21B, 21C) of the forklift 18, 180 determines the ID of the RFID tag 30 associated with that bay 14 as being the last detected or closest tag 30. The forklift operator may then place the product 13 on one of the shelves 12 in the bay 14 and back away from the product 13, thereby removing the product 13 from the forklift tongs 112 and causing the detection of a drop-off event (*e*.*g*., by a weight sensor detecting a decrease in weight, or by a photoelectric sensor detecting that the product 13 is no longer on the forklift tongs 112). That is, at this point, the detection device 40 and the user interface device 23 recognizes that the product 13 has been dropped off of or has been removed from the tongs of the forklift 18, 180 (a drop-off event) and may register that information with the central tracking system 26, along with the current location of the forklift 18 as specified by the last detected location designation RFID tag 30. In particular, the RFID reader 20 or the user interface device 23 sends an identification of the last detected location designation RFID tag ID 30, 32 to the tracking application 36, which will register the product 13 having the product designation RFID tag 34 at that location (e.g., at the bay 14 having the last detected location designation RFID tag 30). As a result, the centralized tracking computer 26 knows, via this communication and detection circuitry, which bay 14 of which shelf 12 upon which a particular product 13 with a particular RFID tag 34 has been placed. The tracking application 36 then stores this information in the product database 27 as being the current location of the product 13.

In some aspects, the forklift 18, 180 may not be equipped with a detection device 40 and, as such, a drop off event cannot be detected by the system. In such an example, the forklift operator can interact with the interface screen 28 of the user interface device 23 by, for example, touching, pressing, swiping, clicking, the interface screen 28 to indicate to the system that a drop off event has occurred. In other examples, the RFID reader 20 can indicate to the user interface device 23 that the RFID reader is no longer locked onto a product 13 and, thus, signal a drop off event to the user interface device 23.

Likewise, when a forklift 18, 180 is used to obtain one of the products 13 off of a shelf 12 and to move the product 13 to a different shelf 12, the same detection and tracking actions take place. That is, when the forklift 18, 180 arrives at a particular shelf 12, the forklift 18, 180 picks up a product 13 off the shelf 12 by placing the product 13 on the tongs 112 of the forklift 18, 180. At that time, the detection device 40 of the forklift 18, 180 recognizes that a product 13 has been placed onto the forklift 18, 180 and turns on the RFID reader 20, which causes the RFID reader 20 of the forklift 18, 180 to then turn on antennas 21A-C and read the tag number or ID of the product designation RFID tag 34 on the product 13 just picked up from the shelf 12. Once the RFID reader 20 locks onto the product 13 just picked up from the shelf 12, the RFID reader 20 then queries the tracking application 36 via the communication devices 22 and 24 with the product 13 information obtained from the product designation RFID tag 34. Then, the RFID reader 20 of the forklift 18, 180 detects the closest location designation RFID tag 30 or 32, using the antennas 21A-C, as the product 13 is moved within the environment 10 to another bay 14, for example. When the product 13 is placed on a shelf 12 at the bay 14, the detection device 40 detects that the product 13 has been removed from the forklift 18, 180 (signaling a drop-off event), and the detection device 40 causes the RFID reader 20 to signal the antennas 21A-C to detect the new location (if it has not already) and registers that new location with the tracking application 36 of the asset tracking and management device 26 by providing the asset tracking and management device 26 with the product tag ID and with the closest or latest detected location designation RFID tag ID 30 or 32. The tracking application 36 then stores this new location information with the product information in the product and order database 27.

In a similar manner, as a forklift 18, 180 delivers a product 13 to a truck via one of the loading bays 16, and when the detection device 40 on the forklift 18 detects a drop-off event (*e*.*g*., based on a change in detected weight or from a photoelectric sensor function), the RFID reader 20, through the use of the antennas 21A-C of the forklift 18 reads the closest location designation RFID tag 32 from the closest loading bay 16 and the RFID reader 20 receives and provides that information to the tracking application 36 to indicate that the product 13 with the detected RFID tag has been dropped off or delivered to a particular loading bay 16 (based on the location designation RFID tag 32 of the bay 16).

As will be understood, when a particular order is to be implemented (i.e., a product or group of products 13 are to be placed on a truck to be delivered to a customer, for example), the tracking application 36 may generate a signal to a user interface device 23 on one of the forklifts 18, 180 telling the forklift operator to pick up a particular product 13 and deliver that product 13 to a particular loading bay 16 to be placed on a particular truck which will be accepting the product 13 for delivery of the order. In this case, the tracking application 26 may provide the forklift operator with an indication of the bay 14 at which the product 13 is located based on the last known position of the product 13 as stored by the product and order database 27. The forklift operator may then drive the forklift 18, 180 to the appropriate bay 14, find the product 13, and pick up the product 13 using the forklift 18, 180 thereby generating a pick-up event. Thus, at this time, the detection device 40 on the forklift 18, 180 detects the presence of a product 13 on the forklift 18 and may turn on the RFID reader 20 of the forklift 18, 180. The RFID reader 20 then turns on the antennas 21A-C and signals the antennas 21A-C to read the RFID tag ID associated with the product designation RFID tag 34 on the product 13. The RFID reader 20 may communicate that information directly, or via the user interface device 23, to the tracking application 36 using the communication network devices 22, 24 and queries the tracking application 36. The tracking application 36 then determines whether the RFID tag ID associated with the product 13 that is now currently on the forklift 18 is the correct RFID tag ID for the actual product 13 associated with the order that is being implemented (using the order and product information in the database 27). The application 36 then sends information indicative of this analysis to the user interface device 23 on the forklift 18, 180 informing the forklift operator whether the correct product for the order is now on the forklift 18, 180.

If the forklift operator has picked up an incorrect product for the order, the user interface device 23 may indicate to the operator that the wrong product is on the forklift 18, 180 using any desired method, such as by flashing a red screen and sounding an audible alarm, providing a message on the screen of the user interface device, etc. In particular, the user interface device 23 may display a red error box and emit a first audible alarm, for example, to the forklift operator to indicate that the incorrect product has been picked up for the order that is being implemented. On the other hand, if the correct product is on the forklift 18, 180, the user interface device 23 may indicate a message to the operator, flash or causes the screen to turn a particular color, such as green for example, and/or sound an audible signal indicating that the correct product for the order being implemented is on the forklift 18, 180. In particular, the user interface device 23 may display a green box and emit a second audible alarm, for example, to the forklift operator to indicate that the correct product has been picked up for the order that is being implemented.

After the forklift operator picks up the correct product and receives, for example, a green screen and audible alarm, or other indication on the user interface device 23 to proceed, the forklift operator then drives to one of the loading bays 16 to deliver the product 13 to a truck. The RFID reader 20 on the forklift 18, 180 may turn on the antennas 21A-C (if not on already) and signal the antennas 21A-C to determine the position of the forklift 18, 180 as it approaches a particular loading bay 16 by reading the location designation RFID tags 32 associated with each loading bay 16 as the forklift 18, 180 passes the loading bays 16. The user interface device 23 or the RFID reader 20 may communicate this location information to the tracking application 36 which may determine if the loading bay 16 being detected is the loading bay 16 at which the product 13 is to be placed on a truck for this order, and may send the results of the determination to the user interface device 23 of the forklift 18, 180 in real time, to thereby instruct the forklift operator if he or she is at the correct loading bay 16. In another case, when the forklift 18, 180 goes up to or onto a truck at a loading bay 16 and performs a drop-off event, the user interface device 23 or the RFID tag reader 20 of the forklift 18, 180 may send the current location of the forklift 18, 180 (based on the currently detected or last detected location designation RFID tag 32) to the tracking application 36 which determines if the forklift 18, 180 is at the correct loading bay 16 for the order being implemented. Thus, the tracking application 36 determines whether the forklift 18, 180 is near or at the appropriate loading bay 16 that is associated with the truck that is actually used for delivering the product 13 sitting on the forklift 18, 180 for the order that is being implemented. In any event, the tracking application 36 sends a signal to the user interface device 23 of the forklift 18, 180 to indicate to the forklift operator that the forklift 18, 180 is at the wrong truck or loading bay 16 or that the forklift 18, 180 is at the correct truck or loading bay 16. The tracking application 36 or the user interface device 23 may use any desired mechanism for notifying the forklift operator of this determination, such as by flashing red or green signals to the user, by sounding an audible alarm or signal, etc., to tell the forklift operator that he or she is at the correct or incorrect truck or loading bay 16. In particular, the user interface device 23 may display a purple box and emit an audible alarm, for example, to the forklift operator to indicate that the correct product has been delivered to the correct truck or loading bay 16. In this manner, the centralized asset tracking and management device 26 directs the forklift operator to pick up the appropriate product 13 for an order, may indicate that the appropriate or non-appropriate product 13 for a particular order is actually on the forklift 18, 180, direct the forklift operator to the appropriate loading bay 16 to which to take the product 13 for an order, and track and indicate to the forklift operator that the product 13 is being dropped off at the correct loading bay 16, based on the RFID tag location information and the RFID product tag information sent to the tracking application 36 from the forklift 18, 180 during operation of the forklift 18, 180.

Additional description regarding the operation of an RFID-based tracking system using location designation RFID tags, including description of example user interfaces associated with the functionalities described in the foregoing, is found in each of U.S. Patent No. 11,358,067 filed May 22, 2020, and U.S. Patent No. 11,023,851, filed March 29, 2019.

Finally, although certain systems and assemblies have been described herein in accordance with the teachings of the present disclosure, the scope of coverage of this patent is not limited thereto. On the contrary, while the disclosed systems and assemblies have been shown and described in connection with various examples, it is apparent that certain changes and modifications, in addition to those mentioned above, may be made. This patent application covers all examples of the teachings of the disclosure that fairly fall within the scope of permissible equivalents. Accordingly, it is the intention to protect all variations and modifications that may occur to one of ordinary skill in the art.

Certain preferred features of the systems, methods and assemblies described are listed in the clauses below.
1. An asset management and tracking system for use in a facility, the system comprising:
   one or more location designation radio frequency identification (RFID) tags disposed within a recess formed in a surface of a floor of the facility, each of the one or more location designation RFID tags indicating respective location information and being readable by an RFID reader to receive the location information,
   wherein a depth of the recess with respect to the surface of the floor surrounding the recess is no greater than 0.125 inches, and wherein each of the one or more location designation RFID tags is entirely contained within the recess such that a top of each of the one or more location designation RFID tags is no higher than the surface of the floor surrounding the recess.
2. The asset management and tracking system of clause 1, wherein the top of each of the one or more location designation RFID tags is below the surface of the floor surrounding the recess, wherein a space between the top of each of the one or more location designation RFID tags and the surface of the floor is filled with a bonding agent securing the one or more location designation RFID tags in the recess.
3. The asset management and tracking system of clause 1, wherein the one or more location designation RFID tags disposed within the recess consist of a single location designation RFID tag, wherein a length of the recess is approximately equal to a length of the single location designation RFID tag and a width of the recess is approximately equal to a width of the of the single location designation RFID tag.
4. The asset management and tracking system of clause 1, wherein the one or more location designation RFID tags disposed within the recess comprise a plurality of location designation RFID tags disposed along a length of the recess, wherein a width of the recess is approximately equal to a width of one or more plurality of location designation RFID tags.
5. The asset management and tracking system of clause 1, wherein the depth of the recess with respect to the surface of the floor surrounding the recess is no greater than 0.04 inches.
6. The asset management and tracking system of clause 5, wherein the depth of the recess with respect to the surface of the floor surrounding the recess is no greater than 0.02 inches.
7. The asset management and tracking system of clause 1, wherein the RFID reader is mounted to a movable device and configured to read the one or more location designation RFID tags as the movable device moves within the facility.
8. The asset management and tracking system of clause 7, wherein the movable device is a forklift.
9. The asset tracking and management system of clause 7, further comprising:
   one or more antennas disposed on the movable device, each of the one or more antennas being configured to detect and read the one or more location designation RFID tags based on a signal received from the RFID reader.
10. The asset management and tracking system of clause 7, further comprising a sensor-based detection device disposed on the movable device, the sensor-based detection device being configured to control the RFID reader to read the one or more location designation RFID tags or a product designation RFID tag on an object in response to the sensor-based detection device detecting the object in proximity to the sensor-based detection device.
11. The asset management and tracking system of clause 10, wherein the RFID reader is controlled to read the product designation RFID tag, further comprising a portable communication device disposed on the movable device, the portable communication device being communicatively coupled to the RFID reader, wherein the RFID reader is configured to transmit product information read from the product designation RFID tag to the portable communication device, and wherein the portable communication device is configured to wirelessly transmit the received product information to an asset tracking and management device.
12. The asset management and tracing system of clause 1, wherein each of the one or more location designation RFID tags comprises:
   an inlay having a first side and a second side opposite the first side, the inlay further comprising:
   an antenna, an integrated circuit, and a substrate, the antenna and the integrated circuit being disposed on the substrate;
   a first protective layer disposed on the first side of the inlay; and
   a second protective layer disposed on the second side of the inlay.
13. The asset management and tracking system of clause 12, wherein each of the one or more location designation RFID tags further comprises a printing layer fixedly disposed on the first player to accept printing, wherein the printing layer is visible on the corresponding location designation RFID tag from a position above corresponding location designation RFID tag when the corresponding location designation RFID tag is disposed within the recess.
14. The asset management and tracking system of clause 12, wherein each of the one or more location designation RFID tags has an overall thickness of approximately 0.02 inches.
15. A method associated with an asset management and tracking system in a facility, the method comprising:
   forming a recess in a surface of a floor of the facility, wherein a depth of the recess with respect to the surface of the floor surrounding the recess is no greater than 0.125 inches;
   disposing one or more location designation radio frequency identification (RFID) tags entirely within the recess such that a top of each of the one or more location designation RFID tags is no higher than the surface of the floor surrounding the recess, each of the one or more location designation RFID tags indicating respective location information and being readable by an RFID reader to receive the location information.
16. The method of clause 15, wherein the top of each of the one or more location designation RFID tags disposed in the recess is below the surface of the floor surrounding the recess, and the method further comprising filling a space between the top of each of the one or more location designation RFID tags and the surface of the floor with a bonding agent to secure the one or more location designation RFID tags in the recess.
17. The method of clause 15, wherein disposing the one or more location designation RFID tags in the recess consists of disposing a single location designation RFID tag in the recess, and wherein forming the recess comprises forming the recess with a length approximately equal to a length of the single location designation RFID and with a width approximately equal to a width of the single location designation RFID tag.
18. The method of clause 15, wherein disposing the one or more location designation RFID tags in the recess comprises disposing a plurality of location designation RFID tags disposed along a length of the recess, and wherein forming the recess comprises forming the recess with a width approximately equal to a width of one or more plurality of location designation RFID tags.
19. The method of clause 15, wherein the depth of the recess with respect to the surface of the floor surrounding the recess is no greater than 0.04 inches.
20. The method of clause 19, wherein the depth of the recess with respect to the surface of the floor surrounding the recess is no greater than 0.02 inches.
21. The method of clause 15, further comprising:
   providing the RFID reader, the RFID reader being mounted to a movable device, and reading the one or more location designation RFID tags via the RFID reader as the movable device moves within the facility.
22. The method of clause 21, wherein the movable device is a forklift.
23. The method of clause 21, further comprising:
   providing one or more antennas, the one or more antennas being disposed on the movable device; and
   detecting and reading the one or more location designation RFID tags based on a signal received from the RFID reader.
24. The method of clause 21, further comprising:
   providing a sensor-based detection device, the sensor-based detection dice being disposed on the movable device;
   via operation of the sensor-based detection device, sensing an object in proximity to the sensor-based detection device;
   in response to detecting the object, controlling the RFID reader via the sensor-based detection device to read the one or more location designation RFID tags or a product designation RFID tag on the object.
25. The method of clause 24, wherein the RFID reader is controlled to read the product designation RFID tag, and the method further comprising:
   providing a portable communication device, the portable communication device being disposed on the movable device;
   communicatively coupling the portable communication device to the RFID reader;
   via the RFID reader, transmitting product information read from the product designation RFID tag to the portable communication device; and
   via the portable communication device, wirelessly transmitting the received product information to an asset tracking and management device.
26. The method of clause 15, wherein each of the one or more location designation RFID tags comprises:
   an inlay having a first side and a second side opposite the first side, the inlay further comprising: an antenna, an integrated circuit, and
   a substrate, the antenna and the integrated circuit being disposed on the substrate;
   a first protective layer disposed on the first side of the inlay; and
   a second protective layer disposed on the second side of the inlay.
27. The method of clause 26, wherein each of the one or more location designation RFID tags further comprises a printing layer fixedly disposed on the first player to accept printing, wherein the printing layer is visible on the corresponding location designation RFID tag from a position above corresponding location designation RFID tag when the corresponding location designation RFID tag is disposed within the recess.
28. The method of clause 26, wherein each of the one or more location designation RFID tags has an overall thickness of approximately 0.02 inches.

## Claims

1. An asset management and tracking system for use in a facility, the system comprising:
one or more location designation radio frequency identification (RFID) tags disposed within a recess formed in a surface of a floor of the facility, each of the one or more location designation RFID tags indicating respective location information and being readable by an RFID reader to receive the location information,
wherein a depth of the recess with respect to the surface of the floor surrounding the recess is no greater than 0.125 inches, and wherein each of the one or more location designation RFID tags is entirely contained within the recess such that a top of each of the one or more location designation RFID tags is no higher than the surface of the floor surrounding the recess.

2. The asset management and tracking system of claim 1, wherein:
the top of each of the one or more location designation RFID tags is below the surface of the floor surrounding the recess, wherein a space between the top of each of the one or more location designation RFID tags and the surface of the floor is filled with a bonding agent securing the one or more location designation RFID tags in the recess,
AND/OR
the one or more location designation RFID tags disposed within the recess consist of a single location designation RFID tag, wherein a length of the recess is approximately equal to a length of the single location designation RFID tag and a width of the recess is approximately equal to a width of the of the single location designation RFID tag.

3. The asset management and tracking system of any one of the preceding claims, wherein the one or more location designation RFID tags disposed within the recess comprise a plurality of location designation RFID tags disposed along a length of the recess, wherein a width of the recess is approximately equal to a width of one or more plurality of location designation RFID tags.

4. The asset management and tracking system of any one of the preceding claims, wherein the depth of the recess with respect to the surface of the floor surrounding the recess is no greater than 0.04 inches, and optionally:
wherein the depth of the recess with respect to the surface of the floor surrounding the recess is no greater than 0.02 inches.

5. The asset management and tracking system of any one of the preceding claims, wherein the RFID reader is mounted to a movable device and configured to read the one or more location designation RFID tags as the movable device moves within the facility.

6. The asset management and tracking system of claim 5, wherein:
the movable device is a forklift,
AND/OR
further comprising: one or more antennas disposed on the movable device, each of the one or more antennas being configured to detect and read the one or more location designation RFID tags based on a signal received from the RFID reader,
AND/OR
further comprising a sensor-based detection device disposed on the movable device, the sensor-based detection device being configured to control the RFID reader to read the one or more location designation RFID tags or a product designation RFID tag on an object in response to the sensor-based detection device detecting the object in proximity to the sensor-based detection device, and optionally:
wherein the RFID reader is controlled to read the product designation RFID tag, further comprising a portable communication device disposed on the movable device, the portable communication device being communicatively coupled to the RFID reader, wherein the RFID reader is configured to transmit product information read from the product designation RFID tag to the portable communication device, and wherein the portable communication device is configured to wirelessly transmit the received product information to an asset tracking and management device

7. The asset management and tracing system of any one of the preceding claims, wherein each of the one or more location designation RFID tags comprises:
an inlay having a first side and a second side opposite the first side, the inlay further comprising:
an antenna,
an integrated circuit, and
a substrate, the antenna and the integrated circuit being disposed on the substrate;
a first protective layer disposed on the first side of the inlay; and
a second protective layer disposed on the second side of the inlay.

8. The asset management and tracking system of claim 7, wherein:
each of the one or more location designation RFID tags further comprises a printing layer fixedly disposed on the first player to accept printing, wherein the printing layer is visible on the corresponding location designation RFID tag from a position above corresponding location designation RFID tag when the corresponding location designation RFID tag is disposed within the recess,
AND/OR
each of the one or more location designation RFID tags has an overall thickness of approximately 0.02 inches.

9. A method associated with an asset management and tracking system in a facility, the method comprising:
forming a recess in a surface of a floor of the facility, wherein a depth of the recess with respect to the surface of the floor surrounding the recess is no greater than 0.125 inches;
disposing one or more location designation radio frequency identification (RFID) tags entirely within the recess such that a top of each of the one or more location designation RFID tags is no higher than the surface of the floor surrounding the recess, each of the one or more location designation RFID tags indicating respective location information and being readable by an RFID reader to receive the location information.

10. The method of claim 9, wherein:
the top of each of the one or more location designation RFID tags disposed in the recess is below the surface of the floor surrounding the recess, and the method further comprising filling a space between the top of each of the one or more location designation RFID tags and the surface of the floor with a bonding agent to secure the one or more location designation RFID tags in the recess,
AND/OR
disposing the one or more location designation RFID tags in the recess consists of disposing a single location designation RFID tag in the recess, and wherein forming the recess comprises forming the recess with a length approximately equal to a length of the single location designation RFID and with a width approximately equal to a width of the single location designation RFID tag,
AND/OR
disposing the one or more location designation RFID tags in the recess comprises disposing a plurality of location designation RFID tags disposed along a length of the recess, and wherein forming the recess comprises forming the recess with a width approximately equal to a width of one or more plurality of location designation RFID tags,
AND/OR
the depth of the recess with respect to the surface of the floor surrounding the recess is no greater than 0.04 inches, and optionally: wherein the depth of the recess with respect to the surface of the floor surrounding the recess is no greater than 0.02 inches.

11. The method of claims 9 or 10, further comprising:
providing the RFID reader, the RFID reader being mounted to a movable device, and
reading the one or more location designation RFID tags via the RFID reader as the movable device moves within the facility.

12. The method of claim 11:
wherein the movable device is a forklift,
AND/OR
further comprising:
providing one or more antennas, the one or more antennas being disposed on the movable device; and
detecting and reading the one or more location designation RFID tags based on a signal received from the RFID reader,
AND/OR
further comprising:
providing a sensor-based detection device, the sensor-based detection dice being disposed on the movable device;
via operation of the sensor-based detection device, sensing an object in proximity to the sensor-based detection device;
in response to detecting the object, controlling the RFID reader via the sensor-based detection device to read the one or more location designation RFID tags or a product designation RFID tag on the object, and optionally
wherein the RFID reader is controlled to read the product designation RFID tag, and the method further comprising:
providing a portable communication device, the portable communication device being disposed on the movable device;
communicatively coupling the portable communication device to the RFID reader;
via the RFID reader, transmitting product information read from the product designation RFID tag to the portable communication device; and
via the portable communication device, wirelessly transmitting the received product information to an asset tracking and management device.

13. The method of any one of claims 9 to 12, wherein each of the one or more location designation RFID tags comprises:
an inlay having a first side and a second side opposite the first side, the inlay further comprising:
an antenna,
an integrated circuit, and
a substrate, the antenna and the integrated circuit being disposed on the substrate;
a first protective layer disposed on the first side of the inlay; and
a second protective layer disposed on the second side of the inlay.

14. The method of claim 13, wherein:
each of the one or more location designation RFID tags further comprises a printing layer fixedly disposed on the first player to accept printing, wherein the printing layer is visible on the corresponding location designation RFID tag from a position above corresponding location designation RFID tag when the corresponding location designation RFID tag is disposed within the recess,
AND/OR
wherein each of the one or more location designation RFID tags has an overall thickness of approximately 0.02 inches.
